# EUROPEAN PATENT SPECIFICATION

(11) **EP 2 571 783 B1**
(45) Date of publication and mention of the grant of the patent: **24.12.2014**
(21) Application number: 11784192.4
(22) Date of filing: 18.05.2011
(51) Int. Cl.: A01N 1/02, B65D 77/04, B65D 81/38

(54) **Method and apparatus for suspending a double-walled interior container within an exterior shipping container**
Verfahren und Vorrichtung zur Aufhängung eines doppelwandigen Innenbehälters in einem äusseren Versandbehälter
Procédé et appareil pour suspendre un conteneur à double paroi au sein d'un emballage d'expédition externe

(30) Priority: 20.04.2011 FR 1153433; 18.05.2010 US 345631 P
(43) Date of publication of application: 27.03.2013
(73) Proprietor: ST Reproductive Technologies, LLC, Navasota, TX 77868 (US)
(72) Inventor: COGNARD, Eric, F-61420 Fontenai-Les-Louvets (FR)
(74) Representative: Jacob, Reuben Ellis
(86) International application number: PCT/US2011/037034
(87) International publication number: WO 2011/146646

(56) References cited:
- WO-A1-2008/125434
- FR-A1- 2 868 402
- KR-A- 20100 014 590
- US-A- 6 119 465
- US-A- 6 119 465
- US-A1- 2002 084 277
- US-B1- 7 299 650

## Description

### Technical Field

The present embodiments generally relate to transportation and storage devices and more particularly relate to a method and a receiving element for suspending an interior container, such as a bulb, for transport and/or storage.

### Background

Containers exist in a number of shapes and sizes for transporting and/or storing a variety of products. Some products, such as biological materials, require very low temperatures. Generally, these products are stored with a cryogenic fluid, such as, liquid nitrogen at about -196 degrees Celsius. Transporting biological materials with cryogenic fluid liquid nitrogen presents a number of problems. These new problems are commonly handled in one of two ways.

One method for shipping liquid nitrogen cooled products involves shipment in a hermetically sealed container. Since the liquid nitrogen transitions from a liquid phase to a gas phase during shipment, the hermetically sealed container requires a system to control the initial pressure of the container. Otherwise, excessive pressure would build as the liquid nitrogen transfers phases. Hermetically sealed containers can be expensive and bulky, and the required system for controlling the initial pressure can also result in increased costs.

The other method for transporting liquid nitrogen involves the use of a non-hermetically sealed container. Such containers allow nitrogen vapors to freely escape the container, but must stay upright in order to avoid leakage or spilling of the liquid nitrogen. Often non-hermetically sealed large metal containers or cryostats are used for the shipment of cryopreserved materials. These double walled metal containers typically consist of a first wall separated from a second inner wall which holds the liquid nitrogen. The cryostats weight alone contributes significantly to the cost of shipping. Additionally, the long cylindrical shapes of typical cryostats can often put them at risk for tipping during shipment.

One solution resides in dry shipping technologies, which include absorbents for absorbing cryogenic fluids within lighter containers like those disclosed in international PCT patent publication WO 2008/125434.

WO 2008/125434 discloses a non-hermetically sealed container where an insulation bulb is suspended within an outer container. This container is suspended either by direct contact with the interior neck of the bulb or with a unitary elastic sleeve interposed within the neck. Both disclosed embodiments have disadvantages. In the embodiment where a bulb is suspended with direct contact to the interior neck of the bulb localized stress points are created which can result in rupturing the brittle bulb, which would typically be constructed from glass. The unitary elastic sleeve serves to distribute stress throughout the neck, but lacks rigidity for firmly securing the bulb within the outer container. Both embodiments lack the particularly ability to lock a bulb into a suspended position when loaded with products and cryogenic fluids.

In order to overcome these shortcomings of the prior art, there exists a need for a method and an improved device to suspend a container for shipment. More particularly, a need exist for suspending a first container within a second container with an improved receiving element for locking the containers in position relative to each other. The first container can be a double walled container for holding liquid nitrogen, while the second container can be an external shipping package.

A need exists for an improved method and an apparatus for suspending a container for shipping cryopreserved materials in non-hermetically sealed containers, and particularly for maintaining the upright position of the container during shipment.

In order to maintain the integrity of the container and to maintain access to materials stored therein, there exists a need for a receiving element configured within the container. More particularly, a need exists for a sturdy element configured with the container for suspending the container with qualities allowing for the firm locking of the suspension of the container.

### Summary of the Invention

Embodiments of the claimed invention meet these needs, and more, by providing a body constructed from complimentary slices or pieces which can individually pass through the opening of a container and which are configured within the container in a tension fit to provide the body affixed in the container for receiving a locking element generally at the opening of the container. Once the body receives the locking element the container is then locked into place relative to the locking element and can be suspended from the locking element.

The invention is defined in the appended claims.

In one embodiment a receiving element is configured for an interior container with an opening. The interior container can be a bulb, a Dewar vessel, or another container. The receiving element has a body with a first end, a second end and an external surface. The second end of the body is larger than the opening of the interior container or than a neck of the container such that the receiving element, once in the interior container, is larger than the opening of the interior container. The receiving element includes a passage from the first end of the body to the second end of the body forming an internal cavity and an internal surface of the body. An upper lip is formed on the external surface located at the first end of the body and is configured for contacting a top surface at the opening of the container. A base is formed at the second end of the body, and an internal groove is formed on the internal surface of the body. The shape of the body's exterior can provide a fit within the container while being too large for removal from the container, and the internal groove is configured for receiving a locking element. A locking element can be inserted in the container and interlock with the receiving element thereby suspending the interior container relative to the locking element.

The construction of the body on the interior of the interior container is achieved by the assembly of separate pieces or slices which together form the body. While the pieces can be joined together with an adhesive or by other means, the pieces can also, when properly arranged at the neck or opening of the container, but in a tension fit ultimately held in place by the interior surface of the container itself. To this end, the body would have a generally annular cross section for cylindrical containers, but that other shapes are envisioned within the scope of the present invention. For example, in the event the container has a cross section other than cylindrical, the receiving element would be formed in shape with an external surface matched to the internal surface of the container. Regardless of the shape of the container and receiving element, the receiving element would be constructed from several pieces, where each piece individually passes through the opening for arrangement on the interior of the container. The body can be formed from a mold and dimensioned to fit tightly in the top of a container. Subsequently, the body can be cut in order to produce a plurality of appropriately dimensioned pieces for passing into the interior of the container. In order to achieve this fit, the pieces can be constructed from Styrofoam, plastic, rubber, or another sufficiently elastic material; preferably a lighter material.

The body can further comprise a neck portion and a base portion. The neck portion can be more narrow and dimensioned to fit in the neck of the container. The base portion can expand outward from the neck and can be dimensioned to match the internal surface of the top portion of the container.

In another embodiment the body is divided into a plurality of pieces where at least one piece is configured with parallel side edges. Typically, when dividing an object with an annular or circular cross section cuts are made through the center point resulting in each piece having edges which converge towards the center point, a proximal end, and diverge towards the outer surface, a distal end. In order to construct the body within the container, all but one piece can be configured into position leaving one last piece and one missing section. The last piece must either be slid in from the top or slid from the center of the container outwards, or slid in some combination of these directions. A piece cut in the typical manner would not be able to reach its final position inside the interior of the container by horizontally sliding into position because the distal surface would not pass the gap of the proximal surfaces formed by the neighboring pieces. Nor would the final piece be able to be dropped vertically into position because the base has a greater radius than the neck, so the bottom most portion would not pass the edges of the neighboring pieces at the top of the container.

In order to overcome this problem the present methods and devices provide for cutting the body in several pieces including at least one piece cut with parallel side edges. The remaining pieces are configured to have a missing section with corresponding parallel side edges. This can be accomplished at the time the body is cut by providing at least two parallel cuts, as opposed to cuts through the center point or the circular or annular cross-section.

In another embodiment, the final piece can be configured such that side edges can converge towards a distal end relative to the center of the interior container. The remaining pieces of the body can form a body with a missing section, where the missing section has corresponding edges created by those pieces neighboring the missing section. In this way, the final piece can be slid into place in the same manner as a final piece with parallel sides.

The body can be divided into four separate pieces, five separate pieces, six separate pieces, or more pieces. For example, the body can be divided into at least eight separate piece, at least ten separate pieces, or at least twelve separate pieces. The container dimensions can dictate what size pieces can pass into the interior and thus what how many pieces are required to achieve that size.

The number of pieces can also dictate the number of piece designs formed when the body is divided. In one embodiment, the body can be constructed from a plurality of pieces having three distinct designs. In yet another embodiment, the body can be constructed from a plurality of pieces having four distinct designs. While in still another embodiment, the body can be constructed from pieces having more than four distinct designs.

One embodiment of the present invention relates to a method for suspending an interior container. The method begins with the step of forming a receiving element at an opening of the interior container. The receiving element is then secured with the opening of the interior container. A locking element is then inserted into the opening of the interior container for engaging the receiving element where the locking element is coupled to a first portion of an exterior container. The receiving element is both secured within the interior container and engaged with the locking element sufficiently to suspend the interior container by the locking element and the first portion of the exterior container can be attached to a second portion of the exterior container which then surrounds the suspended interior container.

The step of forming the receiving element begins by placing a plurality of pieces of the receiving element in the opening. The method can continue by arranging the plurality of pieces into an annular body missing a single section, where the missing section has two edges. A last piece of the receiving element having two sides corresponding to the edges of the missing section can then be placed in the opening and slide into the place of the missing single section thereby completing the body formed at the opening of the container.

In one embodiment, the corresponding edges of the single missing element and the last piece can be generally parallel edges. In another embodiment, the corresponding edges of the single missing element and the last piece can converge towards their distal end relative to the center of the container.

The interior container can thus be suspended within another container, such as a shipping container.

### Brief Description of Drawings

FIG. 1 illustrates an exploded view of a container in accordance with certain embodiments of the present invention.
FIG. 2 illustrates a perspective view of a cover for interfacing the receiving element of the present invention.
FIG. 3 illustrates a sectional view of a cover for interfacing the receiving element of the present invention.
FIG. 4A and 4B illustrate axial sectional views of closing and controlling components of the container.
FIG. 5 illustrates an axial sectional view of a container in accordance with certain embodiments of the present invention.
FIG. 6A illustrates a partially exploded view of a receiving element in accordance with certain embodiments of the present invention.
FIG. 6B illustrates an isometric view of a receiving element in accordance with certain embodiments of the present invention.
FIG. 6C illustrates an isometric view of a receiving element in accordance with certain embodiments of the present invention.
FIG. 7A illustrates one embodiment of a receiving element in accordance with certain embodiments of the present invention.
FIG. 7B illustrates one embodiment of a receiving element in accordance with certain embodiments of the present invention.
FIG. 7C illustrates one embodiment of a receiving element in accordance with certain embodiments of the present invention.
FIG. 7D illustrates one embodiment of a receiving element in accordance with certain embodiments of the present invention.
FIG. 8 illustrates one embodiment of a receiving element in accordance with certain embodiments of the present invention.
FIG. 9 illustrates an embodiment of a receiving element in accordance with the present invention coupled with the opening of a container.

### Best Modes for Carrying Out the Invention

The present inventive embodiments include a variety of aspects. The following descriptions are provided to list elements and describe some of the embodiments of the present invention. The variously described examples should not be construed to limit the present invention to only the explicitly described systems, techniques, and applications.

The invention is defined in the claims.

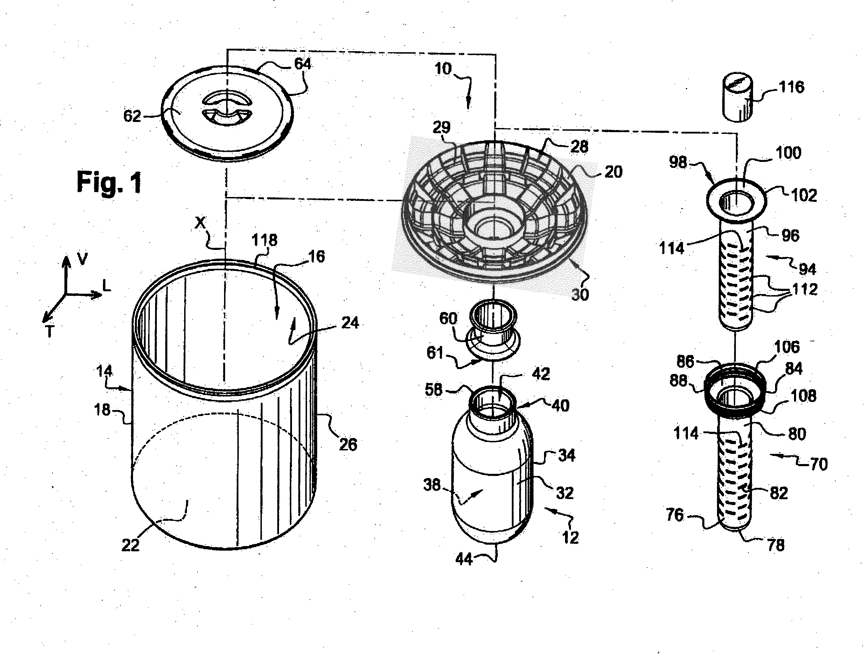

Turning now to the figures, and particularly FIGS. 1-5 several views of a transportation and/or storage device 10 are illustrated. In particular, FIG. 1 provides an exploded view of a transportation and/or storage device 10 comprising an interior container in the form of a bulb 12, such as a double-walled vessel or a glass Dewar vessel, for suspension within an outer packaging structure 14. The outer packaging structure 14 consists of a wall 18, such as a cylindrical wall, or a set of walls, defining an internal volume 16 inside which the insulating bulb 12 can be suspended.

The packaging structure 14 can be a barrel, a cask or a drum, or another outer container with a curvilinear cross-section. Naturally, the packaging structure 14 can also take a number of other shapes, including a plurality of polyhedral configurations. The packaging structure 14 can comprise a drum with a main vertical axis X, a cylindrical wall 18, an upper horizontal wall consisting of a detachable cover 20, and a lower horizontal wall 22 forming the bottom of the drum. In one embodiment, the main vertical axis X can constitute an overall axis of symmetry for the components of transportation and/or storage device 10. The cylindrical wall 18 can define an inner cylindrical face 24 an outer cylindrical face 26.

The cover 20 can be detachably joined onto the cylindrical drum and can include an upper horizontal face 28 and a lower horizontal face 30. The lower horizontal face can be configured to rest on the cylindrical wall 18 and can be configured to suspend the bulb 12.

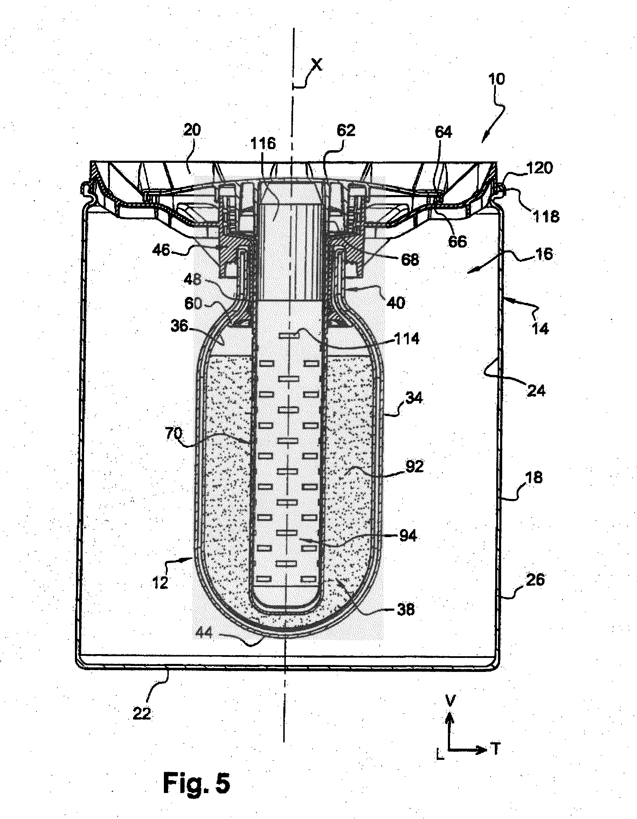

The double-walled insulating bulb 12 can include a body 32 having an outer wall 34 and an inner wall 36 (seen in FIG. 5), which can be more or less parallel and separated by a space. The space between the inner wall 36 and the outer wall 38 can comprise a vacuum in order to improve heat transfer properties between the inner wall 36 and the outer wall 38. The inner wall 36 defines an internal volume 38 of the insulating bulb 12.

The bulb 12 can include an upper neck 40 defining an upper opening 42, to permit the filling of an internal volume 38 of the insulating bulb 12 with cryogenic fluid. The inner wall 36 and the outer wall 38 can be joined at an upper edge 58 in the neck 40. The insulating bulb 12 also comprises, vertically opposite the neck 40, a bottom 44 that is illustrated as largely hemispherical. The insulating bulb can also be constructed from glass, or from another material know for Dewar vessels.

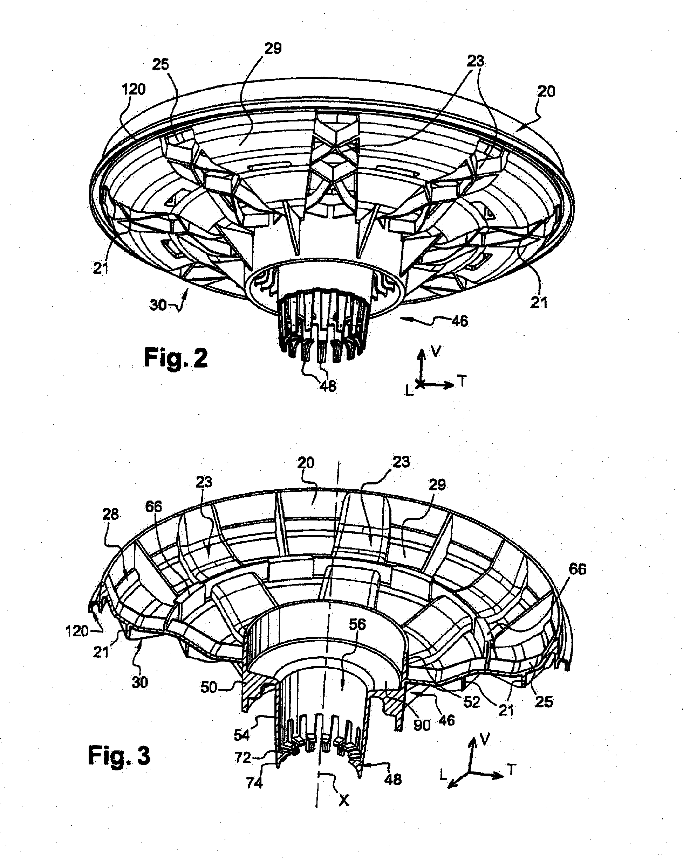

Turning to FIG. 2 and FIG. 3 the cover 20 is illustrated in greater detail. Supporting means 46 are formed on a portion of the detachable cover 20 for suspending the insulating bulb 12 within the storage and transportation device 10. The supporting means 46 can include attachment means 48 capable of engaging, directly or indirectly, with sole inner wall 36 of the bulb 12 to vertically suspend bulb 12 by its neck 40.

Thus, in a mounted position, seen in FIG. 5, the bulb 12 hangs freely in the space within the internal volume 16 defined by the packaging structure 14. In one embodiment the insulating bulb 12 hangs without contact between outer wall 34 of bulb 12 and the walls of packaging structure 14, particularly the inner wall 24 or the upper face of bottom 22.

The supporting means 46 can be directly formed by outer packaging structure 14 without the need to provide an intermediate load bearing structure, such as braces. Attachment means 48 can be integrally formed with the cover 20 and can be manufactured by casting, blow molding, or by extrusion.

The cover 20 can exhibit an elastic deformation capacity determined and defined so as to permit, particularly in case of shock(s) or fall(s), a limited movement of the bulb 12 in the packaging internal volume 16, and in such a way that the outer wall 34 of the suspended bulb 12 does not contact the walls 22, 24 of the packaging structure 14.

The cover 20 can also be capable of locally deforming elastically. To this end, the cover 20 can include an annular elastic deformation area 29 located at the radial periphery. This elastic deformation area 29 is capable of absorbing all or part of the mechanical forces resulting from shock(s) received by the packaging structure 14, particularly the outer wall 26 or bottom 22, in particular in the event of a vertical fall of the device 10.

This elastic deformation area 29 makes it possible to prevent, or at least to limit, the transmission to the inner wall 36 of the bulb 12 the mechanical forces attributable to such shocks onto packaging structure 14 or to a fall of transportation and/or storage device 10.

In one embodiment, the cover 20 is made of several parts, such as a first central part, on which the bulb 12 is suspended, and a second less rigid peripheral part capable of deforming elastically and that, radially laid out around the central bearing part, is capable of ensuring the elastic connection with the drum of the packaging structure 14. Such a second part can be constructed from, for example, elastic bellows, ensuring a damping and/or filtering function to limit the transmission of mechanical forces between the packaging structure 14 and the bulb 12.

The cover 20 can be made of a single piece of an elastomer material exhibiting a certain elastic deformation capacity sufficient for absorbing the forces in the event of fall or shock. Regardless of the material, the cover 20 can be constructed to bear the weight of the bulb 12 once filled with cryogenic fluid.

Consequently, the elastic deformation capacity of cover 20 is specifically a function of the weight of the bulb 12, of the empty space remaining around bulb 12 in volume 16, which determines the possible movement or possible displacement of bulb 12, however, without as a result permitting bulb 12 to contact structure 14.

In one embodiment, the cover 20 comprises reinforcement means, such as ribs 21, capable of locally rigidifying the cover 20 to support the weight of suspended bulb 12 while absorbing the forces in the event of shock(s) or fall(s). The ribs 21 can be in the shape of arms 23 extending radially from an outer edge 25 towards the center of the cover 20 and that are, for example, distributed in a "star," either angularly or regularly.

Referring now to Fig. 3, the supporting means 46 of the cover 20 can be seen in greater detail, including a central tubular element 50 with a circular section. The tubular element 50 can include an upper block 52 and a lower block 54 that, in the mounted position, respectively extend outside and above the neck 40 of bulb 12, and at least partly through upper opening 42 of bulb 12.

The central tubular element 50 defines an orifice 56 leading into internal volume 38 of the bulb 12, which progressively flares out downwards from upper edge 58, which constitutes the only area of connection between the outer 34 and inner 36 walls.

The attachment means 48 formed on the cover 20 can comprise a locking mechanism including "L" shaped articulating members or lugs 48, which can have a first unlocked position and a second locked position. FIG. 2 and FIG. 3 exlimpify the locking mechanism in the unlocked position. In FIG. 5 the lugs 48 are pushing into a locked position by which can engage with another member supported in the neck 40 of the insulating bulb 12 and at least one of the walls of the packaging structure 14. Notches 66 can be distributed circumferentially around the orifice 56 on an upper face 28 of the cover 20.

Referring briefly back to FIG. 1, the device 10 can include an annular sleeve 60 that, in the mounted position, is radially interposed between the tubular element 50 comprising attachment means 48 and inner wall 36 of bulb 12 located in the proximity of flared neck 40 whose shape it follows. The sleeve 60 is illustrated as an annular sleeve constructed from a plurality of pieces and constructed within the neck 40 of the bulb and can be especially designed to absorb shock and vibrations that would otherwise transfer to the inner wall 36 of the bulb 12.

Still referring to FIG. 1, the device 10 can further include a closing stopper 62 capable of obturating the orifice 56 of the tubular element 50 of the cover 20. The stopper 62 is added onto the cover 20 by a bayonet-type mount and includes pins 64 around its circumference intended to engage the notches 66 of the cover 20. The stopper 62 can include an annular skirt 68 (Seen in Fig. 5), which, extending vertically, is centered on the vertical axis X of the device 10.

The stopper 62 can have a smaller diameter than the cover 20 and can contribute, in the mounted position, to rigidifying the center part of the cover 20, where the center part of the cover comprises the tubular element 50 on which bulb 12 is suspended. The annular area extending radially between the notches 66 and the edge of the cover 20 forming said elastically deformable area 29 intended to absorb the forces in case of shocks.

Again referring back to Fig. 1, the device 10 can include a control component 70 whose vertical introduction downwards into the orifice 56 of the tubular element 50, is capable of causing the movement of attachment means 48 to the locking position. The attachment means 48 can be characterizes as including lugs or "L" shaped articulating members which can be pushed outward by the introduction of the control component 70, as illustrated in FIG. 5, to ensure a connection between the bulb 12 and the tubular element 50 of the cover 20.

The lugs 48 are mounted in a movable manner between a retracted, unlocked position and an extended, locking position and are, for example, regularly distributed circumferentially on the inside end of block 54 of tubular element 50.

Each lug 48 exhibits an "L" section and includes a control arm 72 that extends horizontally, radially, inside the tubular element 50, and a locking arm 74 forming a hook that extends vertically downwards, when attachment means 48 are in the retracted position as illustrated in FIG. 2 or FIG. 3.

The pivoting of attachment the lugs 48 from the retracted position to the locking position is accomplished by the vertical introduction downwards of the control component 70, through the upper orifice 56 of the tubular element 50. The control component 70 can include a tubular body 76 having a diameter smaller than that of the lower block 54 of the tubular element 50 in such a way that when the control component 70 is introduced axially, the tubular body 76 engages with the control arms 72 of the lugs 48 and causes a 45° pivoting of the lugs 48 from the retracted position to the locking position, seen Fig. 5. The tubular body 76 of the control component 70 then immobilizes the lugs 48 in a locking position in such a way that control component 70 advantageously constitutes a means of latching lugs 48 in the locking position.

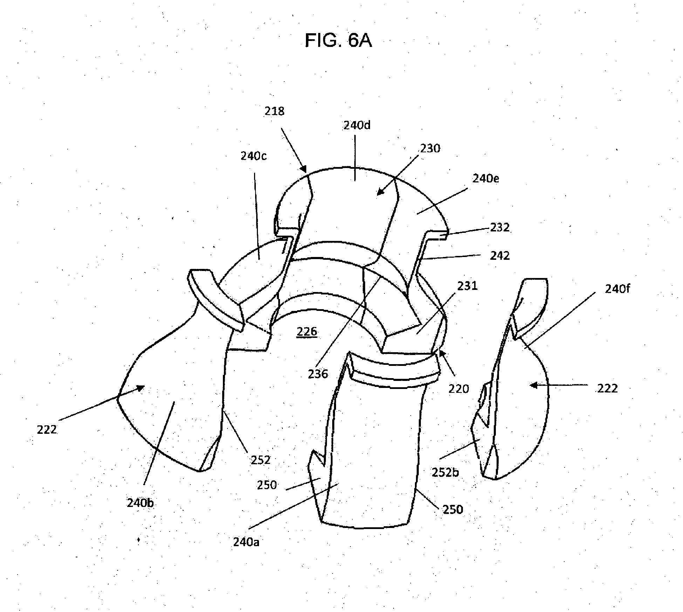

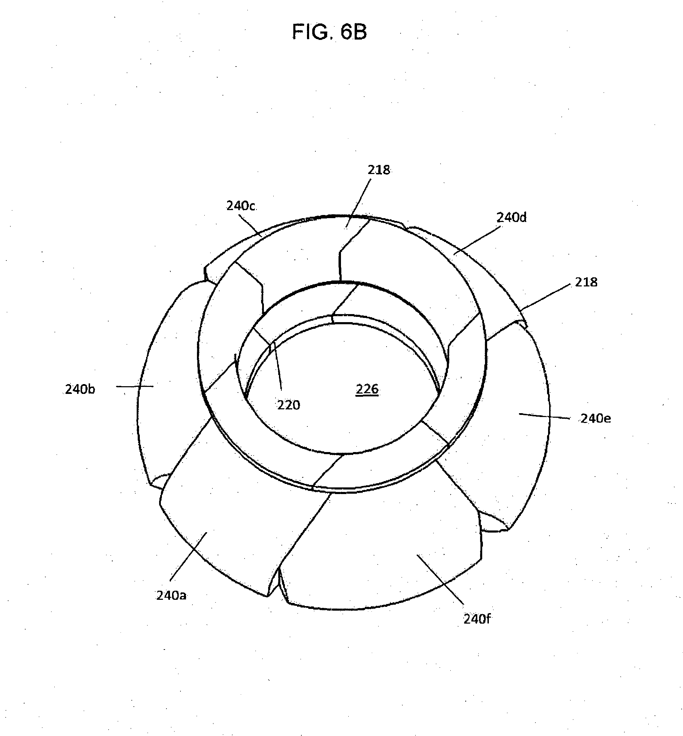

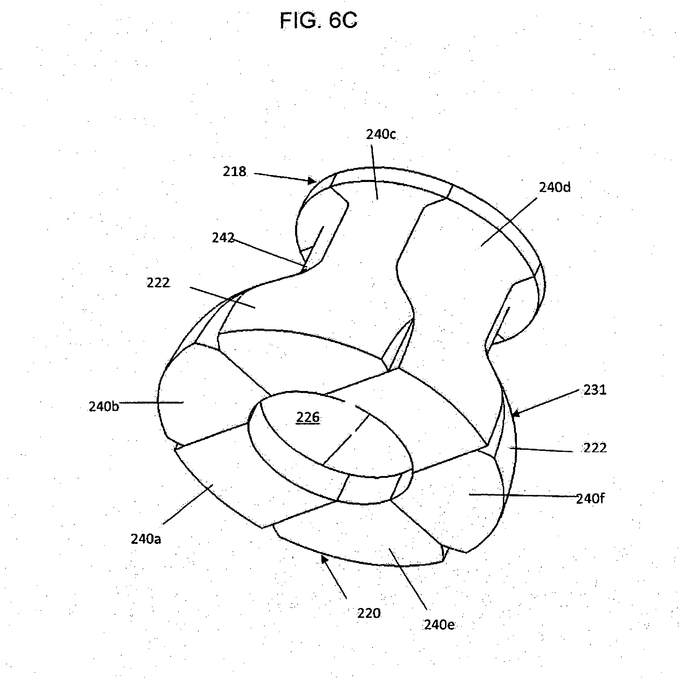

The control arms 72 then extend vertically along outer cylindrical wall 80 of tubular body 76 of control component 70. The lugs 48 extend obliquely in the locking position, so as to serve as a support against a face 61 opposite sleeve 60, which is integrated with inner wall 36 in the proximity of neck 40. In one embodiment, the sleeve 60 can include a means for receiving the lugs 48 in their locking position for firmly and securely locking the attachment means 48 into the bulb. In particular, the lugs 48 can configured to engage an internal groove 236 (seen in Fig. 6A) formed in the sleeve 60 for locking the bulb 12 into place relative to the cover 20 and the control component 70.

In the mounted position, the sleeve 60 is interposed radially between the inner wall 36 of the bulb 12 and the outside cylindrical surface of the lower block 54 of the tubular element 50 penetrating into the bulb 12 in the area of neck 40. In one embodiment, the sleeve 60 can be constructed from a number of rigid pieces which are formed together within the neck 40 of the insulating bulb 12, which is described in more detail in Fig. 6A.

With reference to FIG. 1, the control component 70 can include a tubular body 76 with a lower end 78 closed by a bottom. In one embodiment, the cylindrical wall 80 is equipped with at least one hole 82 for the passage of cryogenic fluid, such as for filling and emptying cryogenic fluid.

The tubular body 76 can include a plurality of holes 82 distributed circumferentially around the cylindrical wall 80 and vertically over several superimposed rows among which the holes 82 are laid out in a staggered fashion, from one row to another.

The control component 70 can include, at its upper end, an upper "L" flange 84 having a horizontal wall 86 that extends radially to the outside from the upper end of tubular body 76 of control component 70 and a vertical wall 88.

In the mounted position (seen in Fig. 5), the upper flange 84 of the control component 70 is supported by means of a wall 86 against a complementary shoulder 90 formed by connecting an upper block 52 and a lower block 54 of the tubular element 50.

The control component 70 can extend vertically through the internal volume 38, but without direct contact between its body 76 or its end 78 and the inner wall 36 of the bulb 12.

With reference to FIG. 5, the device 10 can comprise a positioning means 92 capable of maintaining the control component 70 in a center position during transport. The positioning means 92 can particularly ensure a mechanical connection between the tubular body 76 of the control component 70 and the inner wall 36 of the bulb 12 in such a way that the forces that are capable of being transmitted in the event of a shock or fall are then advantageously distributed over the entire inner wall 36 of the bulb 12 and not only on the portion of inner wall 36 in the area of the neck 40 and of the sleeve 60.

In one embodiment, the positioning means 92 can be a positioning and absorption means 92 and can be arranged in all or part of the internal volume 38 of the bulb 12, prior to introducing the control component 70. The positioning and absorption means and can, for example, consist of polyurethane foam or phenolic foam, in flakes or expanded form. The positioning, and absorption means 92 can be selected to absorb the cryogenic fluid at the time of the filling. In this embodiment, the positioning and absorption means 92 can retain the cryogenic fluid and prevent the spreading of the cryogenic fluid outside the bulb 12 after absorption.

In one embodiment, the device 10 can include a closing component 94 which can be vertically introduced into the tubular body 76 of the control component 70. The closing component 94 can be configured obturate the holes 82 for limiting the circulation of cryogenic fluid through the control component 70 and limiting possible contact with the transported and/or stored product.

The closing component 94 can further include a carrier tube for the transported and/or stored product. In one embodiment, the product is carried by a conventional straw introduced inside the closing component 94. The closing component 94 can include a tubular body 96 and a flange 98 for mating with the flange 84 of the control component 70. The flange 98 of the closing component 94 can primarily consists of a largely horizontal wall 100. In one embodiment, the horizontal wall is equipped with an outer radial end with an annular locking ring 102.

The annular locking ring 102 of the flange 98 is capable of engaging with at least one locking detent 104 formed from the internal vertical face of vertical wall 88 of flange 84 of control component 70, so as to irreversibly lock entire closing component 94 and control component 70, in order to guarantee the integrity of the single-use device, while precluding any later reuse.

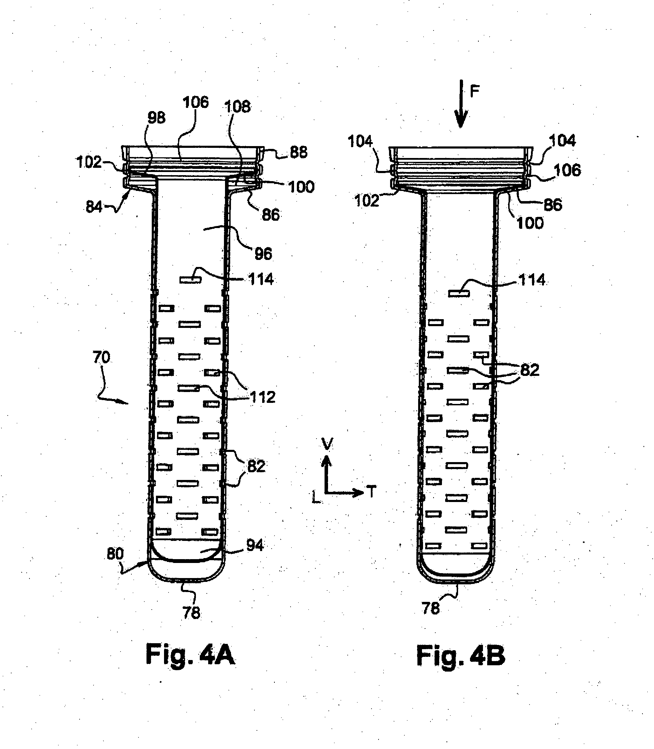

According to the embodiment illustrated in FIGS. 4A and 4B, the control component 70 can include a notched vertical face comprising at least one upper pad 106 and one lower pad 108 that respectively define a first notch 110 located between the upper and lower pads and a second notch that, located below the inside pad 108, corresponds to said notch 104.

As illustrated in FIG. 4A, the closing component 94 is capable of occupying a first, so-called assembly, position, in which locking ring 102 of closing component 94 is introduced into first notch 110 of flange 84 of control component 70. As illustrated in FIG. 4B, the closing component 94 is still capable of occupying a second, so-called locking, position, in which ring 102 is introduced into second, so-called locking, detent 104 of control component 70.

In one embodiment, the closing component 94 comprises holes 112 that, in assembly position, at least partly coincide with passage holes 82 of control component 70 intended to allow internal volume 38 of bulb 12 to be filled with cryogenic fluid through control component 70. In the locking position, the holes 82 of the control component 70 are at least partly obturated by the body 96 of the closing component 94 so as to prevent any later addition of cryogenic fluid to guarantee the end user the integrity of the device and its single-use utilization.

The closing component 94 and the control component 70 can include ventilation means 114 which are intended, in the locking position, to enable the evacuation of the gases progressively released by the cryogenic fluid during transport and/or storage. The ventilation means 114 through the closing component 94 and the control component 70 consist of at least one ventilation orifice 114 that is formed by of at least one of holes 82, 112 of each component 70 and 94 located in the upper part of each.

The upper ventilation orifices 114 permit the evacuation of gases released by the cryogenic fluid that thus escape from internal volume 38 to the outside while passing through the opening 42 of the neck 40 of the bulb 12. The upper ventilation orifices 114 of the control component 70 and the closing component 94 do not coincide axially when the assembly is in the assembled position illustrated in Figure 4A, but when the control component 70 and the closing component 94 do coincide axially when in the locked position illustrated in Figure 4B.

The upper tubular part of closing component 94 can be capable of receiving an internal stopper 116, which allows the ventilation of the bulb 12 by permitting the gases produced by the cryogenic fluid to be evacuated to the outside. The stopper 116 can also be capable of limiting the overflow of cryogenic fluid outside bulb 12 in the event that an excessive amount was to be introduced, voluntarily or not, in relation to the maximum absorption capacity of the absorption means 92. The stopper 116 can make it possible to limit the thermal exchanges between the internal volume 38 of the bulb 12 and the outside and to prevent the formation of condensation in the proximity of the neck 40, due to the temperature differences between the inside and the outside of the bulb 12.

In one embodiment, the transportation and/or storage device 10 can be placed in a final mounted position illustrated in Figure 5 with by the following steps. The absorbing and positioning means 92 can be introduced inside the volume 38 of the bulb 12 and a sleeve 60 can be mounted inside the neck 40. As will be described in greater detail later, the sleeve 60 can be constructed within the neck 40 of the bulb 12.

The sleeve 60 can be a rigid body formed in the neck 40 of the bulb 12 from a collection of complimentary pieces. The sleeve 60 can be too large to fit into the opening 42 in the bulb 12 in its constructed configuration, whereas the individual pieces forming the rigid sleeve can easily pass into the opening 42. This embodiment can serve to secure the bulb 12 particularly well to the cover 20, while minimizing the transfer of energy, such as shocks or impacts to the bulb 12.

The device 10 can be pre-mounted by introducing the tubular element 50 of the cover 20 into the upper opening 42 of the bulb 12 and by proceeding with the locking. Once the tubular element 50 is introduced, lugs 48 can be extended inside bulb 12 in the retracted position. The vertical introduction of control component 70 through the passage orifice 56 of cover 20 that causes lugs 48 to pivot to their locking position, where by the lugs will engage the receiving sleeve 60 and, in particular, the internal groove 236 of the sleeve 60. Once the control component 70 is introduced, the cover 20 and the bulb 12 are then connected to one another through lugs 48 that are maintained in a locked position by control component 70.

In one embodiment, the control component 70 is entirely introduced into the bulb 12, such as, until the flange 84 of the control component 70 is received in the upper block 52 of the tubular element 50 and the wall 86 engages with the shoulder 90.

The closing component 94 can then be mounted in control component 70 after the locking of securing means 48. In one embodiment, the closing component 94 can be assembled with the control component 70 in advance, in order to be mounted simultaneously with the latter in a manner similar to that which has just been described. In another embodiment, the closeting component 94 can be omitted and products can be stored directly into the control component 70.

The cover 20 can then be integrally mounted with the cylindrical wall 18 which can include an upper edge 118 intended to engage with a complementary edge 120 of the cover 20. In one embodiment, the upper edge 118 of the cylindrical wall 18 forms a male part intended to be tight-fixed into a complementary annular groove comprising edge 120 of cover 20. The engagement between the edges 118, 120 of the cylindrical wall 18 and of the cover 20 forms the outer packaging structure 14. Once the assembly of the cover 20 with the cylindrical wall 18 of outer packaging structure 14 is completed, the bulb 12 can be suspended and extends vertically into internal volume 16.

The internal volume 38 of the bulb 12 is then filled, through the top, by pouring a cryogenic fluid through an upper opening defined by the flange 98 of closing component 94. The cryogenic fluid introduced in a certain quantity can be completely absorbed by absorption means 92 provided for such purpose.

Once the filling is completed, the products to be transported and/or stored are, for example, introduced directly into the volume defined by the closing component 94, which then constitutes a carrier tube. In an alternative embodiment, the products can be carried by straws within a goblet that is vertically introduced from top to bottom inside the closing component 94. Similarly, such a goblet can be introduced directly into the control component 70 and the closing component 94 can be omitted.

The skirt 68 of the stopper 62 constitutes an actuation part capable of engaging with the horizontal wall 100 of the flange 98 of the closing component 94 in order to cause its displacement from the assembly position to the locking position.

When the stopper 62 is vertically introduced downwards for the purpose of closing the device 10, the lower end of skirt 68 then exercises a closing force F (FIG. 4B) on the flange 98 of the control component 94 that causes its descent into control component 70 and the passage of the locking ring 102 from the first detent 110 to the second detent 104. The stopper 62 can be simultaneously, or successively, driven in rotation by means of the handle comprising its upper face to complete the closing following the bayonet-type mounting.

Each notch 66 can comprise a staged path (not depicted) in which each pin 64 is engaged when the stopper 62 is rotated, which automatically causes a descending movement of the skirt 68 when pins the 64 of the stopper 62 are introduced into the complementary notches 66 of support the cover 20 of the packaging structure 14.

The transportation and/or storage device 10 is thus capable of being transported while the cover 20 on top is being maintained in the vertical position or capable of permitting the storage of the product for a period determined by the amount of cryogenic fluid.

According to one embodiment, the transportation device 10 can include only the control component 70, without a closing component 94. The control component 70 can then directly constitute a carrier tube within which the products to be transported or stored, or within which the support pipe containing the products are lodged.

The upper part of the tubular body 76 of the control component 70 is capable of receiving the stopper 116, which permits the evacuation of the gases produced by the cryogenic fluid outside the bulb 12, to limit the thermal exchanges and also to limit the discharge of cryogenic fluid outside the bulb 12.

The outer wall 34 can be free from any contact and the mechanical forces transmitted in the case of shock(s) or fall(s) are only exerted on the inner wall 36 alone. In fact, the mechanical forces caused by shocks or a fall are, if necessary, transmitted to the inner wall 36 of the bulb 12, through the attachment means 48, which engages, directly or through the intervention of the sleeve 60, with said inner wall 36.

Because of the distribution of the forces over the entire inner wall 36, the risk of rupturing the neck 40 in the proximity of the connection area 58 between the outer 34 and the inner 36 walls of the double-walled glass insulating bulb 12 in particular is greatly reduced.

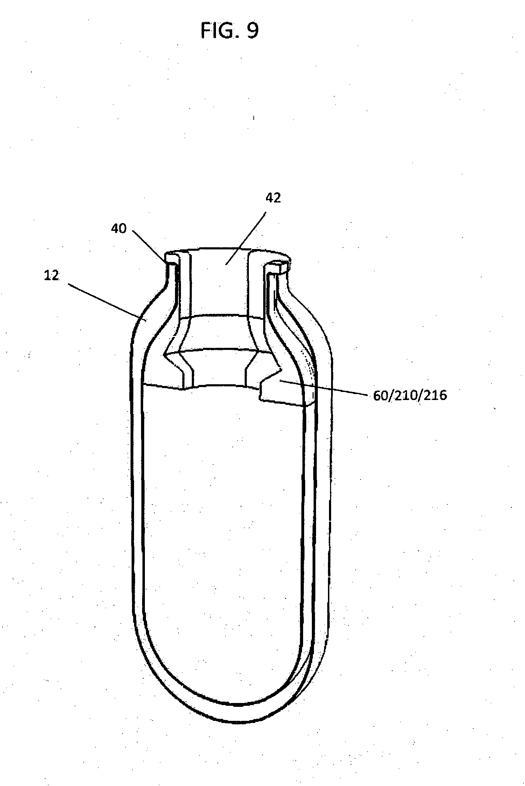

Turning now to figures FIGS. 6A-6C, a sleeve 60 or receiving element 210 is shown for coupling on the interior of a interior container or bulb 12 (Seen in FIG 9). In particular the receiving element is coupled to an opening 42 and neck 40 in the bulb 12 (Seen in FIG 9). The receiving element 210 comprises a body 216 constructed from a plurality of pieces 240 a, b, c, d, e, f. The body 216 can have a generally annular cross section formed by a first end 218, a second end 220, and a passage 226 there between forming an internal cavity in the body 216 and an interior surface 230. The body 216 is depicted having a generally annular cross-section, but other shapes are envisioned for coupling with various containers based on the interior surface of the interior container.

The body 216 can be seen having an upper lip 232 at the first end 218 connected to a neck 242 which expands into a base 231. The upper lip 232 can be configured for resting on the top surface of an interior container opening, and the neck 242 can be configured for fitting into the neck of the interior container opening. The base 231 is formed such that an external surface 222 contacts the interior surface of the interior container when the body 216 is configured within the interior container 210.

An internal groove 236 can be formed on the interior surface of the body 216 for the purpose of receiving attachment means 48 which can be in the form of lugs 48. The base 231 and its external surface 222 provide means for coupling the body 216 with the interior container, and the internal groove 236 provides for coupling the receiving element to a part external to the interior container for suspending the interior container. In one embodiment, the internal groove 236 can receive a locking element. The locking element can comprise any mechanism capable of passing into the passage of the body with at least a portion that expands or is actuated to expand into the internal groove 36, such that the locking element is secured to the receiving element 210.

Referring now to only FIG. 6A, a piece 240a can be seen with two parallel sides 250a and 250b, which correspond to the neighboring edges 252a and 252b respectively. In the embodiment depicted, piece 240d is also illustrated with parallel sides, although it should be appreciated embodiments are envisioned with only one pieces having parallel sides and with multiple pieces having parallel sides.

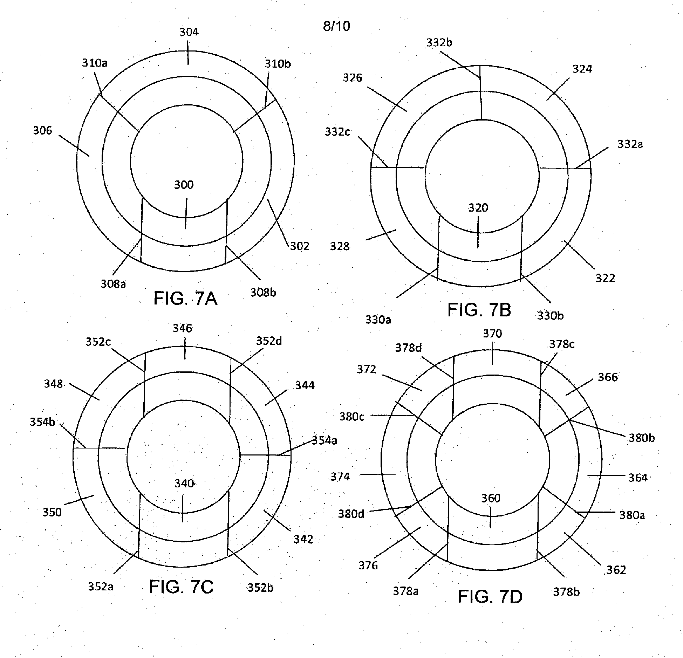

FIG. 7A illustrates the top view of one embodiment of the present invention having four pieces. In this embodiment piece 300 has parallel edges formed at sides 308a and 308b of neighboring pieces 306 and 302 respectively. Pieces 302 and 306 abut piece 304 at edges 310a and 310b respectively. In this embodiment each of the four pieces has a different design.

FIG. 7B illustrates a five piece design for the construction of a body 210 in accordance with one embodiment of the present invention. Piece 320 has two parallel sides which abut neighboring pieces 328 and 322 at edges 330a and 330b, respectively. Pieces 324 and 326 are each defined with radial cuts 332a, 332b, and 332c and can be the same design giving this arrangement a minimum of four different piece designs.

FIG. 7C illustrates a top view of the six piece design seen in FIG. 6A-C. Parallel sides 352a and 352b define the sides of a piece 340 which can side into position within a bottle. Piece 346 can be identical to piece 140 with parallel sides 152c and 152d. Piece 146 can be dimensioned differently from 340, but may be easier to manufacture as an identical piece. Similarly, pieces 342 and 348 each adjoin one of the parallel edges 352b and 352d, respectively, and radial cuts 354a and 354b respectively. Pieces 342 and 348 can also be dimensioned identically or can be dimensioned slightly different, so they are not interchangeable. Finally, pieces 344 and 350 can adjoin parallel edges 352c and 352d respectively and radial edges 354a and 354b, respectively. Pieces 344 and 350 can also be identical, or dimensioned slightly differently providing a minimum of three different pieces for the six piece configuration.

FIG 7D illustrates a top view of an embodiment with eight pieces and a minimum of four different piece designs. Pieces 360 and 370 can be seen with parallel edges 378a, b and 378c, d respectively. Each of the remaining pieces 362, 364, 366, 372, 374 and 376 are illustrated divided by the parallel edges and radial edges 380a, b, c, and d.

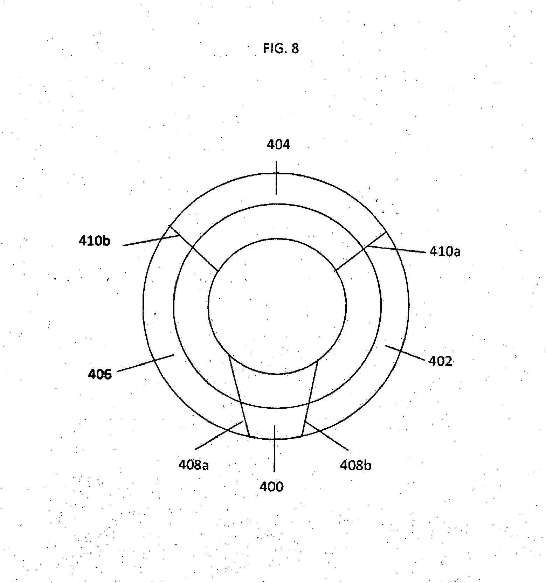

FIG. 8 illustrates a top view of another embodiment of the present invention. Piece 400 is illustrated with edges 408a and 408b which converge in the radially distal direction relative to the center of the container. Piece 400 can still slide into a final place within the interior container in the same way a last piece having parallel sides: This piece has been illustrated in a four piece arrangement abutting pieces 402 and 406, which are themselves separated by piece 404 with edges 410a, and 410b. It should be appreciated that the piece with converging sides can also be used in each of the embodiments illustrated in FIGS. 7B-D and is merely illustrated in the four piece configuration for the sake of simplicity.

FIG. 9 illustrates a cross section of a bulb 12 showing the body 216 formed from a plurality of pieces and held in the opening 40 of the bulb 12. This illustrated interior container has a generally circular cross section thereby fitting with a body having a generally annular cross section.

It should be appreciated that the basic concepts described herein can be embodied in a number of ways. The present invention involves numerous and varied embodiments of bodies formed from a plurality of pieces for forming on the interior of a container and receiving an external element.

As such, the particular embodiments or elements of the invention disclosed by the description or shown in the figures are not intended to be limiting, but rather exemplary of the numerous and varied embodiments generically encompassed by the invention

Moreover, for the purposes of the present invention, the term "a" or "an" entity refers to one or more of that entity; for example, "a container" refers to one or more of the containers. As such, the terms "a" or "an", "one or more" and "at least one" can be used interchangeably herein.

The background section of this patent application provides a statement of the field of endeavor to which the invention pertains.

## Claims

1. A receiving element (60) for a double-walled interior container (12) having an opening, the receiving element comprising:
a. a body (216) with a first end (218), a second end (220) and an external surface, wherein the second end is larger than the opening (42) of the double-walled interior container;
b. a passage (226) in the body from the first end to the second end forming an internal cavity and an internal surface (230) of the body;
c. an upper lip (232) on the external surface located at the first end configured for contacting a top surface at the opening of the double-walled interior container;
d. a base located at the second end of the body; and
e. an internal groove (236) formed on the internal surface which is adapted to receive a locking element thereby suspending the double-walled interior container relative to the locking element;
wherein the body is formed by a plurality of separate pieces (240a-f) configured inside the opening of the double-walled interior container and wherein the locking element is coupled to a first portion (20) of an exterior container (14).

2. The receiving element of claim 1 wherein the body further comprises a neck (242).

3. The receiving element of claim 2 wherein the neck of the body is dimensioned to contact the interior of a neck (140) of the double-walled interior container.

4. The receiving element of claim 1 wherein at least one of the plurality of pieces is formed with parallel sides.

5. The receiving element of claim 3 wherein all but one piece can be configured within the double-walled interior container leaving an opening with parallel edges.

6. The receiving element of claim 1 wherein the body is comprised of at least 4 separate pieces; at least 5 separate pieces; at least 6 separate pieces; or at least 8 separate pieces.

7. The receiving element of claim 1 comprising three designs for the pieces or comprising 4 designs for the pieces.

8. The receiving element of claim 1 wherein any two of the plurality of pieces cannot pass through the double-walled interior container opening when configured for forming the receiving element.

9. The receiving element of claim 1 wherein at least one piece is configured to have two sides and the remaining pieces are configured in an arrangement having a single opening with two edges corresponding to the two sides and wherein the at least one piece configured to have two sides is slidable into the single opening inside the double-walled interior container forming a complete body on the interior of the double-walled container.

10. The receiving element of claim 9 wherein the two sides are parallel or wherein the two sides are at converging angles towards a distal end relative to the center of the interior container when the piece is configured for placement in the double-walled interior container.

11. A method for suspending a double-walled interior container comprising the steps of:
a. forming a receiving element from a plurality of separate pieces at an opening of the double-walled interior container, the receiving element having: a body with a first end, a second end and an external surface, wherein the second end is larger than the opening of the double-walled interior container; a passage in the body from the first end to the second end forming an internal cavity and an internal surface of the body; an upper lip on the external surface located at the first end configured for contacting a top surface at the opening of the double-walled interior container; a base located at the second end of the body; and an internal groove formed on the internal surface which receives a locking element thereby suspending the double-walled interior container relative to the locking element; wherein the separate pieces are sized to individually pass through the opening;
b. securing the upper lip of the receiving element with the top surface of the double-walled interior container;
c. inserting a locking element into the opening of the double-walled interior container, wherein the locking element is coupled to a first portion of an exterior container;
d. engaging the internal groove of the receiving element with the locking element; and
e. engaging the first portion of the exterior container with a second portion of the exterior container surrounding the double-walled interior container.

12. The method according to claim 11 wherein the step of forming a receiving element further comprises the steps of:
a. placing a plurality of pieces of the receiving element in the opening;
b. arranging the plurality of pieces into an annular body missing a single section, where the missing single section has two edges;
c. placing a last piece of the receiving element into the opening, the last piece having two side surfaces corresponding to the edges;
d. sliding the last piece of the receiving element into the missing section.

## Patentansprüche

1. Aufnahmeelement (60) für einen doppelwandigen Innenbehälter (12), der eine Öffnung hat, wobei das Aufnahmeelement Folgendes umfasst:
a. einen Körper (216) mit einem ersten Ende (218), einem zweiten Ende (220) und einer äußeren Oberfläche, wobei das zweite Ende größer ist als die Öffnung (42) des doppelwandigen Innenbehälters;
b. einen Durchgang (226) in den Körper von dem ersten Ende zum zweiten Ende, der eine innere Aussparung und eine innere Oberfläche (230) des Körpers bildet;
c. einen oberen Rand (232) auf der äußeren Oberfläche, der am ersten Ende angeordnet ist, der zum Berühren einer oberen Oberfläche an der Öffnung des doppelwandigen Innenbehälters ausgelegt ist;
d. einen Boden, der am zweiten Ende des Körpers angeordnet ist; und
e. eine innere Nut (236), die auf der inneren Oberfläche gebildet ist, die geeignet ist, um ein Verschlusselement aufzunehmen, wodurch der doppelwandige Innenbehälter in Bezug auf das Verschlusselement aufgehängt wird;
wobei der Körper durch mehrere getrennte Stücke (240a-f) gebildet ist, die in der Öffnung des doppelwandigen Innenbehälters ausgelegt sind, und wobei das Verschlusselement mit einem ersten Teil (20) eines äußeren Behälters (14) verbunden ist.

2. Aufnahmeelement gemäß Anspruch 1, wobei der Körper ferner einen Stutzen (242) umfasst.

3. Aufnahmeelement gemäß Anspruch 2, wobei der Stutzen des Körpers so ausgelegt, dass er die Innenseite eines Stutzens (140) des doppelwandigen Innenbehälters berührt.

4. Aufnahmeelement gemäß Anspruch 1, wobei mindestens eines der mehreren Stücke mit parallelen Seiten gebildet ist.

5. Aufnahmeelement gemäß Anspruch 3, wobei alle bis auf ein Stück in dem doppelwandigen Innenbehälter ausgestaltet werden können und eine Öffnung mit parallelen Kanten zurücklassen.

6. Aufnahmeelement gemäß Anspruch 1, wobei der Körper aus mindestens vier separaten Stücken, mindestens fünf separaten Stücken, mindestens sechs separaten Stücken oder mindestens acht separaten Stücken besteht.

7. Aufnahmeelement gemäß Anspruch 1 umfassend drei Ausgestaltungen für die Stücke, die vier Ausgestaltungen für die Stücke umfassen.

8. Aufnahmeelement gemäß Anspruch 1, wobei beliebige zwei der mehreren Stücke nicht durch die Öffnung des doppelwandigen Innenbehälters passen, wenn sie zum Bilden des Aufnahmeelements ausgestaltet sind.

9. Aufnahmeelement gemäß Anspruch 1, wobei mindestens ein Stück ausgestaltet ist, um zwei Seiten zu haben, und die verbleibenden Stücke in einer Anordnung ausgestaltet sind, die eine einzelne Öffnung mit zwei Kanten hat, die den zwei Seiten entsprechen, und wobei das mindestens eine Stück, das ausgestaltet ist, um zwei Seiten zu haben, in die einzelne Öffnung innerhalb des doppelwandigen Innenbehälters, der einen vollständigen Körper auf dem doppelwandigen Innenbehälter bildet, verschoben werden kann.

10. Aufnahmeelement gemäß Anspruch 9, wobei die zwei Seiten parallel sind, oder wobei sich die zwei Seiten an konvergierenden Winkeln in Richtung eines distalen Endes in Bezug auf den Mittelpunkt des Innenbehälters befinden, wenn das Stück für die Positionierung in dem doppelwandigen Innenbehälter ausgebildet ist.

11. Verfahren zum Aufhängen eines doppelwandigen Innenbehälters umfassend die folgenden Schritte:
a. Bilden eines Aufnahmeelement aus mehreren getrennten Stücken an einer Öffnung des doppelwandigen Innenbehälters, wobei das Aufnahmeelement Folgendes aufweist: einen Körper mit einem ersten Ende, einem zweiten Ende und einer äußeren Oberfläche, wobei das zweite Ende größer ist als die Öffnung des doppelwandigen Innenbehälters; einen Durchgang in dem Körper von dem ersten Ende zum zweiten Ende, der eine innere Aussparung und eine innere Oberfläche des Körpers bildet; einen oberen Rand auf der äußeren Oberfläche, der am ersten Ende angeordnet ist, der zum Berühren einer oberen Oberfläche an der Öffnung des doppelwandigen Innenbehälters ausgelegt ist; einen Boden, der am zweiten Ende des Körpers angeordnet ist; und eine innere Nut, die auf der inneren Oberfläche gebildet ist, die ein Verschlusselement aufnimmt, wodurch der doppelwandige Innenbehälter in Bezug auf das Verschlusselement aufgehängt wird; wobei die separaten Stücke eine Größe aufweisen, dass sie einzeln durch die Öffnung passen;
b. Befestigen des oberen Rands des Aufnahmeelements an der oberen Oberfläche des doppelwandigen Innenbehälters;
c. Einführen eines Verschlusselements in die Öffnung des doppelwandigen Innenbehälters, wobei das Verschlusselement mit einem ersten Teil eines äußeren Behälters verbunden ist;
d. Betätigen der inneren Nut des Aufnahmeelements mit dem Verschlusselement; und
e. Betätigen des ersten Teils des äußeren Behälters mit einem zweiten Teil des äußeren Behälters, der den doppelwandigen Innenbehälter umgibt.

12. Verfahren gemäß Anspruch 11, wobei der Schritt des Bildens eines Aufnahmeelements ferner folgende Schritte umfasst:
a. Positionieren mehrerer Stücke des Aufnahmeelements in die Öffnung;
b. Anordnen der mehreren Stücke in einem ringförmigen Körper, in dem ein einzelner Abschnitt fehlt, wobei der fehlende einzelne Abschnitt zwei Kanten hat;
c. Positionieren eines letzten Stückes des Aufnahmeelements in die Öffnung, wobei das letzte Stück zwei Oberflächen hat, die den Kanten entsprechen;
d. Verschieben des letzten Stücks des Aufnahmeelements in den fehlenden Abschnitt.

## Revendications

1. Elément récepteur (60) destiné à un conteneur intérieur à double paroi (12) présentant une ouverture, l'élément récepteur comportant :
a. un corps (216) doté d'une première extrémité (218), d'une seconde extrémité (220) et d'une surface externe, dans lequel la seconde extrémité est plus grande que l'ouverture (42) du conteneur intérieur à double paroi ;
b. un passage (226) formé dans le corps allant de la première extrémité jusqu'à la seconde extrémité constituant une cavité interne et une surface interne (230) du corps ;
c. une lèvre supérieure (232) sur la surface externe située au niveau de la première extrémité configurée pour se trouver en contact avec une surface supérieure au niveau de l'ouverture du conteneur intérieur à double paroi ;
d. une base située au niveau de la seconde extrémité du corps ; et
e. une gorge interne (236) formée sur la surface interne, laquelle est conçue pour recevoir un élément de verrouillage suspendant de ce fait le conteneur intérieur à double paroi par rapport à l'élément de verrouillage ; le corps étant formé de plusieurs pièces séparées (240a-f) configurées à l'intérieur de l'ouverture du conteneur intérieur à double paroi et dans lequel l'élément de verrouillage est couplé à une première partie (20) d'un conteneur extérieur (14).

2. Elément récepteur selon la revendication 1, dans lequel le corps comporte, de plus, un col (242).

3. Elément récepteur selon la revendication 2, dans lequel le col du corps est dimensionné pour se trouver en contact avec l'intérieur d'un col (140) du conteneur intérieur à double paroi.

4. Elément récepteur selon la revendication 1, dans lequel au moins l'une des plusieurs pièces est formée avec des côtés parallèles.

5. Elément récepteur selon la revendication 3, dans lequel toutes les pièces, sauf une, peuvent être configurées à l'intérieur du conteneur intérieur à double paroi en laissant une ouverture avec des bords parallèles.

6. Elément récepteur selon la revendication 1, dans lequel le corps est constitué d'au moins 4 pièces séparées ; d'au moins 5 pièces séparées ; d'au moins 6 pièces séparées ; ou d'au moins 8 pièces séparées.

7. Elément récepteur selon la revendication 1, comportant trois modèles pour les pièces ou comportant 4 modèles pour les pièces.

8. Elément récepteur selon la revendication 1, dans lequel aucune paire de pièces des plusieurs pièces ne peut passer à travers l'ouverture du conteneur intérieur à double paroi lorsque les deux pièces de la paire sont configurées pour former l'élément récepteur.

9. Elément récepteur selon la revendication 1, dans lequel au moins une pièce est configurée pour présenter deux côtés et dans lequel les pièces restantes sont configurées suivant un agencement présentant une ouverture unique dotée de deux bords correspondant aux deux côtés, et dans lequel l'au moins une pièce configurée pour présenter deux côtés peut coulisser pour entrer dans l'ouverture unique à l'intérieur du conteneur intérieur à double paroi, formant un corps complet sur l'intérieur du conteneur à double paroi.

10. Elément récepteur selon la revendication 9, dans lequel les deux côtés sont parallèles ou dans lequel les deux côtés sont à angles convergents vers une extrémité distale par rapport au centre du conteneur intérieur lorsque la pièce est configurée pour être placée dans le conteneur intérieur à double paroi.

11. Procédé pour suspendre un conteneur intérieur à double paroi comportant les étapes comprenant le fait de :
a. former un élément récepteur à partir de plusieurs pièces séparées au niveau d'une ouverture du conteneur intérieur à double paroi, l'élément récepteur comportant : un corps doté d'une première extrémité, d'une seconde extrémité et d'une surface externe, dans lequel la seconde extrémité est plus grande que l'ouverture du conteneur intérieur à double paroi ; un passage dans le corps allant de la première extrémité jusqu'à la seconde extrémité formant une cavité interne et une surface interne du corps ; une lèvre supérieure sur la surface externe située au niveau de la première extrémité configurée pour être en contact avec une surface supérieure au niveau de l'ouverture du conteneur intérieur à double paroi ; une base placée au niveau de la seconde extrémité du corps ; et une gorge interne formée sur la surface interne qui reçoit un élément de verrouillage de façon à suspendre le conteneur intérieur à double paroi par rapport à l'élément de verrouillage ; dans lequel les pièces séparées sont dimensionnées pour passer individuellement à travers l'ouverture ;
b. fixer la lèvre supérieure à l'élément récepteur avec la surface supérieure du conteneur intérieur à double paroi ;
c. insérer un élément de verrouillage dans l'ouverture du conteneur intérieur à double paroi, dans lequel l'élément de verrouillage est couplé à une première partie d'un conteneur extérieur ;
d. mettre la gorge intérieure de l'élément récepteur en prise avec l'élément de verrouillage ; et
e. mettre la première partie du conteneur extérieur en prise avec une seconde partie du conteneur extérieur entourant le conteneur intérieur à double paroi.

12. Procédé selon la revendication 11, dans lequel l'étape consistant à former un élément récepteur comprend, de plus, les étapes de :
a. placer plusieurs pièces de l'élément récepteur dans l'ouverture ;
b. agencer les plusieurs pièces en un corps annulaire où il ne manque qu'une seule section, dans lequel la section unique manquante comporte deux bords ;
c. placer une dernière pièce de l'élément récepteur dans l'ouverture, la dernière pièce comportant deux surfaces latérales correspondant aux bords ;
d. faire glisser la dernière pièce de l'élément récepteur dans la section manquante.
